# EUROPÄISCHE PATENTANMELDUNG

(11) **EP 4 696 526 A1**
(43) Veröffentlichungstag der Anmeldung: **18.02.2026**
(21) Anmeldenummer: 24194400.8
(22) Anmeldetag: 13.08.2024
(51) Int. Cl.: B60D 1/02, A01B 59/042, B60D 1/07, B62D 53/00

(54) **KUPPLUNGSVORRICHTUNG UND KUPPLUNGSSYSTEM ZUM KUPPELN EINES ANHÄNGERS AN EIN ZUGFAHRZEUG**

(71) Anmelder: Ruf Maschinenbau GmbH & Co. KG, 86874 Zaisertshofen (DE)
(72) Erfinder: Ruf, Hans, 86874 Zaisertshofen (DE)
(74) Vertreter: Hepp Wenger Ryffel AG

(57) **Zusammenfassung**

Die Erfindung bezieht sich auf eine Kupplungsvorrichtung (101) zum Kuppeln eines Anhängers (3) an ein Zugfahrzeug (2). Die Kupplungsvorrichtung umfasst eine Adaptereinheit (4) mit einem ersten Verbindungselement (41) für eine erste Verbindung (5) zu dem Zugfahrzeug (2), sodass die Adaptereinheit (4) um eine horizontale Achse um die erste Verbindung schwenkbar ist. Zudem umfasst die Kupplungsvorrichtung (101) ein zweites Verbindungselement (42) auf einer gegenüberliegenden zweiten Seite der Adaptereinheit (4) für eine zweite Verbindung (6) zu einem komplementären zweiten Verbindungselement (7), sodass die Adaptereinheit (4) relativ zu dem zweiten komplementären Verbindungselement (7) um eine vertikale Achse schwenkbar ist. Das zweite Verbindungselement (42) und ein komplementäres zweites Verbindungselement (7) sind nicht um die horizontale Achse, relativ zueinander, schwenkbar, wenn die zweiten Verbindungselemente (42) die zweite Verbindung (6) ausbilden.

## Beschreibung

Die Erfindung richtet sich auf eine Kupplungsvorrichtung und ein Kupplungssystem zum Kuppeln eines Anhängers an ein Zugfahrzeug gemäss den unabhängigen Ansprüchen. Weitere Ausführungsformen ergeben sich aus den abhängigen Ansprüchen.

Das zuverlässige Kuppeln von Anhängern an Zugfahrzeuge ist besonders in der Logistik in der Landwirtschaft und auf Baustellen. Bekannte Anhänger üben, je nach Beladung, Kräfte auf die Anhängerkupplung aus (sogenannte Stützkräfte). Weil bekannte Anhängerkupplungen hinter der Hinterachse des Zugfahrzeuges positioniert sind, führen hohe Stützlasten dazu, dass die Last auf der Vorderachse abnimmt. Um dies zu vermeiden, werden im Stand der Technik Frontgewichte an das Zugfahrzeug angebracht, um höhere Stützlasten zu ermöglichen. So ist es etwa üblich, dass bis zu 4,5 t Ballastgewichte im Frontbereich eines Traktors angebracht werden, um eine optimierte Achslast und Traktion zu ermöglichen.

Dadurch erhöht sich jedoch das Gewicht des Zugfahrzeugs und die zulässige Beladung des Anhängers reduziert sich. Zudem ist die Verwendung von Frontgewichten zeit- und arbeitsaufwendig.

US 2015/173291 A offenbart eine Anhängevorrichtung für ein landwirtschaftliches Fahrzeug, welche vor- und zurückziehbar ist, um eine optimale Achslast zu ermöglichen. Die Anhängevorrichtung ermöglicht jedoch keine zuverlässige Übertragung einer Stützlast des Anhängers auf das Zugfahrzeug, sodass die Vorder- und Hinterachse des Zugfahrzeugs optimal belastet werden.

Es ist daher eine Aufgabe der vorliegenden Erfindung, diese und andere Nachteile des Stands der Technik zu überwinden und insbesondere eine einfache und kostengünstige Kupplungsvorrichtung zur Verfügung zu stellen, welche eine effektive Achslastenverteilung ermöglicht.

Die Kupplungsvorrichtung zum Kuppeln eines Anhängers an ein Zugfahrzeug umfasst eine Adaptereinheit und ein komplementäres zweites Verbindungselement. Die Adaptereinheit umfasst ein erstes Verbindungselement für eine erste Verbindung zu einem Zugfahrzeug, insbesondere zu einem Getriebeblock des Zugfahrzeugs, sodass die Adaptereinheit um eine horizontale Achse um die erste Verbindung schwenkbar ist. Die Adaptereinheit umfasst ein zweites Verbindungselement auf einer gegenüberliegenden zweiten Seite der Adaptereinheit für eine zweite Verbindung zu einer komplementären zweiten Verbindungseinheit, sodass die Adaptereinheit relativ zu dem zweiten komplementären Verbindungselement um eine vertikale Achse schwenkbar ist. Das zweite Verbindungselement und das komplementäre zweite Verbindungselement sind nicht um die horizontale Achse relativ zueinander schwenkbar, wenn die zweiten Verbindungselement die zweite Verbindung ausbilden. Die horizontale Achse ist bevorzugt senkrecht zu einer Längsachse der Kupplungsvorrichtung und/oder parallel zu einer Radachse der Zugfahrzeuges ausgerichtet.

Die zweite Verbindung, die durch das zweite Verbindungselement und dem komplementären zweiten Verbindungselement gebildet wird, ist daher in vertikaler Richtung steif und überträgt Kräfte von der Zuggabel bzw. vom Anhänger. Durch die Schwenkbarkeit in horizontale Richtung ist aber die Steuerbarkeit des Anhängerzugs gewährleistet.

Dadurch wird ermöglicht, dass die Stützlast des Anhängers näher bei der Hinterachse des Zugfahrzeuges wirkt. Durch den so verkürzten Hebel verringert sich die Anhebung der Vorderachse oder kann gänzlich vermieden werden, wenn z.B. der Kraftangriffspunkt mit der Hinterachse zusammenfällt.

Das erste Verbindungselement ist bevorzugt dem Zugfahrzeug und das zweite Verbindungselement dem Anhänger zugewandt.

Das komplementäre zweite Verbindungselement kann an einer Zuggabel eines Anhängers angebracht sein und insbesondere unbeweglich daran montiert sein. Das komplementäre zweite Verbindungselement kann auch einstückig mit der Zuggabel ausgebildet sein.

Die Erfindung bezieht sich daher auch auf einen Anhänger, der mindestens eine Radachse und eine Zuggabel umfasst, wobei an einem dem Anhänger weggewandten Seite der Zuggabel ein zweites Verbindungselement wie oben beschrieben angebracht ist. Bevorzugt ist das zweite Verbindungselement zwei gegenüberliegenden horizontalen Platten geformt, wie nachfolgend detailliert beschrieben wird. Die mindestens eine Radachse ist dabei asymmetrisch bezüglich einer Anhängerlängsachse angeordnet. Die Radachse kann z.B. hinter, d.h. in einer von der Zuggabel weggewandten Richtung, dem Schwerpunkt des Anhängers angeordnet. Bei mehreren Radachsen sind die Radachsen in entlang der Anhängerlängsachse asymmetrisch angeordnet, wobei der Linienschwerpunkt der Radachsen bevorzugt hinter dem Schwerpunkt des Anhängers liegt.

Die Erfindung bezieht sich zudem auf ein Fahrzeug, bevorzugt einen Traktor, mit einem ersten Verbindungselement wie oben beschrieben.

Ein Abstand des ersten Verbindungselements zum zweiten Verbindungselement der Adaptereinheit kann so gewählt sein, dass eine Anbringung an einem Wagenkasten unter, vor, oder an einer Hinterachse eines Fahrzeuges möglich ist. Insbesondere kann der Abstand aus einem Bereich von 70 cm bis 160 cm, insbesondere von 80 cm bis 150 cm, vorzugsweise von 90 cm bis 140 cm, ausgewählt werden.

Der Fachmann kennt typische Werte für den Überhang von Fahrzeugen von der Hinterachse. Der Abstand ist daher bevorzugt so gewählt, dass der Überhang überbrückt wird und das zweite Verbindungselement sich hinter dem Fahrzeug befindet, wo es an eine Zuggabel angekoppelt werden kann.

Die Adaptereinheit kann eine Ausnehmung auf einer Oberseite und/oder eine Biegung aufweisen. Bei bestimmungsgemässer Anbringung des ersten Verbindungselements an dem Zugfahrzeug wird so bei einem Schwenken der Adaptereinheit um die erste Verbindung ein direkter Kontakt zwischen der Adaptereinheit und einer Hinterachse des Zugfahrzeugs verhindert.

Dadurch wird ermöglicht, das erste Verbindungselement näher bei der Hinterachse anzubringen.

Das zweite Verbindungselement der Adaptereinheit und das komplementäre zweite Verbindungselement können einander an zumindest zwei auf unterschiedlicher Höhe angeordneten Kontaktbereichen kontaktieren, wenn die zweite Verbindung ausgebildet wird. Die Kontaktbereiche können vertikal übereinander angeordnet sein.

Ein weiterer Aspekt der Erfindung betrifft eine Kupplungsvorrichtung, insbesondere eine vorhergehend beschriebene Kupplungsvorrichtung. Die Kupplungsvorrichtung umfasst eine Adaptereinheit mit einem zweiten Verbindungselement auf einer Seite, welches für eine zweite Verbindung zu einem komplementären zweiten Verbindungselement der Kupplungsvorrichtung ausgebildet ist, sodass die Adaptereinheit relativ zum komplementären zweiten Verbindungselement um eine vertikale Achse schwenkbar ist. Das erste und zweite Verbindungselement können einander an zumindest zwei auf unterschiedlicher Höhe angeordneten, insbesondere vertikale übereinander angeordneten, Kontaktbereichen kontaktieren, wenn die zweite Verbindung ausgebildet wird. Die Kontaktbereiche können jeweils ein Kupplungselement, insbesondere einen Dorn und ein Aufnahmeelement, insbesondere eine Buchse aufweise, die komplementär zueinander geformt sind und ineinander greifen.

Die Kontaktbereiche können als Vertiefungen, z.B. konische Vertiefungen, Hervorhebungen wie z.B. Dorne oder Bolzen, oder aus Löchern bestehen.

Dadurch wird ein Ankoppeln entlang einer Achse ermöglicht, um die herum eine Schwenkung möglich bleibt. Gleichzeitig ist durch die fixe Verbindung an zwei Punkten dieser Achse eine Schwenkung um eine Achse senkrecht hierzu verhindert.

Die Kontaktbereiche sind bevorzugt in eine gleich Richtung ausgebildet, d.h. beide nach unten oder beide nach oben zeigen. Dadurch kann eine Gegenstück einfach angebracht werden, indem es eingefahren und dann gegen die Kontaktflächen bewegt wird.

Eines der Kupplungselemente, insbesondere zwei Kupplungselemente, können auf der Adaptereinheit oder dem komplementären Verbindungselement angeordnet sein. Alternativ oder zusätzlich, kann eines der Aufnahmeelemente insbesondere zwei Aufnahmeelemente, auf der anderen der Adaptereinheit und dem komplementären zweiten Verbindungselement angeordnet sein.

Zwischen den auf unterschiedlicher Höhe angeordneten Kontaktbereichen kann ein Arretierbereich angeordnet sein. Der Arretierbereich ist bevorzugt zwischen den oben beschriebenen Kontaktflächen angeordnet. Weiter kann ein Arretierelement vorhanden sein, dass beweglich und insbesondere schwenkbar in den Arretierbereich eingebracht werden kann, um die ausgebildete zweite Verbindung reversibel zu sperren.

Der erste und der zweite Kontaktbereich sind bevorzugt vertikal mindestens 20 cm, insbesondere mindestens 25 cm, vorzugsweise mindestens 30 cm voneinander beabstandet.

Die Adaptereinheit oder das komplementäre zweite Verbindungselement weist bevorzugt ein Gelenk auf, welches eine Rotation von zwei Bereichen der Kupplungsvorrichtung zueinander um eine Längsachse der Kupplungsvorrichtung (d.h. um die eigene Achse) ermöglicht.

Dadurch kann ein angehängter Anhänger in Fahrtrichtung relativ zum Zugfahrzeug rotieren, so dass Bodenunebenheiten besser ausgeglichen werden können.

Das komplementäre zweite Verbindungselement kann bevorzugt eine Zuggabel und ein Anhängerverbindungselement umfassen. Das Anhängerverbindungselement kann für eine Verbindung der Zuggabel zu einem Anhänger ausgebildet sein.

Das komplementäre zweite Verbindungselement kann eine Höhe, von mindestens 15 cm, insbesondere mindestens 22,5 cm, vorzugsweise mindestens 30 cm, aufweisen. Bevorzugt ist die Höhe entlang der Längsachse der Kupplungsvorrichtung konstant.

Die Erfindung bezieht sich zudem auf ein Kupplungssystem. Das Kupplungssystem umfasst eine Kupplungsvorrichtung wie oben beschrieben sowie ein Zugfahrzeug. Die erste Verbindung zum Zugfahrzeug ist in einer Betriebslage unter einer Längsachse der Hinterradaufhängung und/oder zwischen den Längsachsen der Hinterradaufhängung und einer Vorderradaufhängung angebracht.

Dadurch entfaltet die Stützkraft eine reduzierte oder sogar keine Hebelwirkung auf die Vorderachse.

Die erste Verbindung ist in der Betriebslage bevorzugt mindestens 15 cm, besonders bevorzugt mindestens 22,5 cm, ganz besonders bevorzugt mindestens 30 cm vor der Längsachse (der Hinterradaufhängung (H) angebracht ist. Alternativ oder zusätzlich ist die erste Verbindung mindestens 15 cm, besonders bevorzugt mindestens 22,5 cm, ganz besonders bevorzugt mindestens 30 cm unter der Längsachse angebracht ist.

Die Adaptereinheit kann über einen Winkelbereich von mehr als 7.5°, bevorzugt mehr als 15°, besonders bevorzugt mehr als 20°, um die erste Verbindung senkrecht nach oben und/oder unten von einer Längsachse des Getriebeblocks schwenkbar sein. Insbesondere wird bei der Schwenkung die Hinterradaufhängung des Getriebeblocks nicht berührt.

Weitere Ausführungsformen der Erfindung und Verbesserungen der beschriebenen Ausführungsformen werden in der folgenden Beschreibung der Ausführungsformen deutlich.

Die Erfindung wird nun unter Bezugnahme auf bestimmte Ausführungsformen und Figuren beschrieben, die zeigen:
- Figur 1A:: eine Seitenansicht eines Kupplungssystems umfassend die erfindungsgemässe Kupplungsvorrichtung, ein Traktor, und einen Anhänger.
- Figur 1B:: einen vergrösserten Bereich der Kupplungsvorrichtung aus Fig. 1A.
- Figur 2A:: einen Querschnitt der zweiten Verbindung einer Kupplungsvorrichtung.
- Figur 2B:: eine perspektivische Ansicht des komplementären zweiten Verbindungselements nach Fig. 2A.

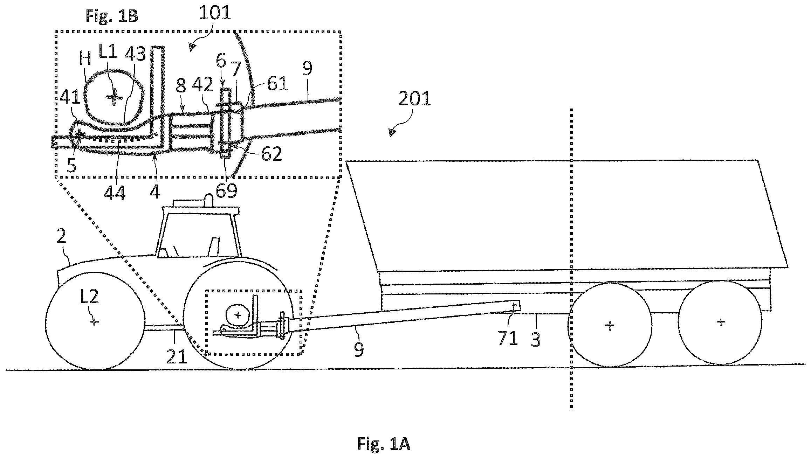

Figur 1A zeigt eine Seitenansicht eines Kupplungssystems 201 umfassend die erfindungsgemässe Kupplungsvorrichtung 101, ein Zugfahrzeug 2, und einen Anhänger 3. Figur 1B zeigt einen vergrösserten Bereich der Kupplungsvorrichtung aus Fig. 1A.

Das Zugfahrzeug ist ein Traktor 2, der eine Hinterradaufhängung H mit einer Längsachse L1 aufweist und eine Vorderradaufhängung mit einer Längsachse L2 aufweist. Am Getriebeblock 21 des Traktors 2 ist die Kupplungsvorrichtung 101 mit einem ersten Verbindungselement 41 auf einem Ende eines Adapterelements 4 für eine erste Verbindung 5 mit dem Getriebeblock 21 angebracht. Die erste Verbindung 5 ist in Längsrichtung des Traktors vor, also versetzt in Richtung der Längsachse L2 der Vorderradaufhängung, und vertikal unterhalb der Längsachse L1 der Hinterradaufhängung H angeordnet. Alternativ kann die erste Verbindung 5 unmittelbar an der Hinterradaufhängung H, vorzugsweise im Wesentlichen auf der Längsachse L1, befestigt sein.

Die Adaptereinheit 4 wird durch eine Adapterplatte gebildet und ist um die erste Verbindung 5 in einem Winkelbereich von 15° nach oben und unten schwenkbar relativ zu einer horizontalen Ausrichtung der Adaptereinheit 4. Die Adaptereinheit 4 weist eine Biegung 44, die als gestrichelte gebogene Linie in Fig. 1B dargestellt ist, und eine Ausnehmung 43 auf der Oberseite auf, sodass die Adaptereinheit 4 nicht mit der Hinterradaufhängung H beim Verschwenken um die erste Verbindung 5 kollidiert.

Die Adaptereinheit 4 weist auf einer, dem ersten Verbindungselement 41 gegenüberliegendem Ende, ein zweites Verbindungselement 42 auf. Das zweite Verbindungselement 42 ist mit einem komplementären zweiten Verbindungselement 7 zu einer zweiten Verbindung 6 verbunden. Das zweite komplementäre Verbindungselement 7 ist am Ende einer Zuggabel 9 verbunden oder verbindbar. Die zweite Verbindung 6 weist zwei übereinander angeordnete Kontaktbereiche 61, 62 auf. Beide Kupplungsbereiche weisen eine Öse auf, die übereinander angeordnet werden kann. Die Ösen der Kontaktbereiche 61, 62 sind durch ein Kupplungselement, welches durch einen gemeinsamen Bolzen 69 gebildet wird, miteinander verbindbar. Die zweite Verbindung 6 ermöglicht, dass die Adaptereinheit 4 relativ zur Zuggabel 9 in einer horizontalen Ebene schwenkbar ist. Die Ösen können runde Öffnungen aufweisen, die auf einer vertikalen Achse angeordnet sind, sodass die Ösen beim Verschwenken der Adaptereinheit 4 relativ zur Zuggabel 9 um den Bolzen 69 in der horizontalen Ebene drehbar sind.

Die Adaptereinheit 4 und das zweite komplementäre Verbindungselement 7, beziehungsweise die Zuggabel 9, sind nicht in einer vertikalen Eben relativ zueinander schwenkbar. Die zwei Kontaktbereiche 61, 62 in Figs. 1A und 1B sind 30 cm voneinander beabstandet, sodass diese einen langen Hebelarm bilden, um eine vertikale Schwenkbarkeit zu verhindern. Somit kann ein Teil einer Anhängelast des Anhängers 3 zuverlässig entlang der Kupplungsvorrichtung 101 vom Anhänger 3 auf den Traktor 2 übertragen werden. Dies bietet zudem den Vorteil, dass Radachsen 31, 32 des Anhängers weiter hinten angeordnet sein können, oder der Anhänger sogar mit weniger Radachsen 31, 32 verwendet werden kann.

Der Anhänger 3, beziehungsweise ein Wagenkasten des Anhängers 3, ist starr mit einer Zuggabel 9 verbunden, welche ein Anhängerverbindungselement 71 aufweist.

Das Kupplungssystem 201 kann den Anhänger 3 umfassen. Der Abstand zwischen der Anhängerverbindung 71 des Kupplungssystems 201 und einem vorderen Ende des Wagenkastens des Anhängers kann mehr als 20%, insbesondere mehr als 25%, vorzugsweise mehr als 30%, einer Länge des Anhängers 3 am Anhänger 3 angebracht sein.

Die Adaptereinheit 4 weist zwischen dem ersten und dem zweiten Verbindungselement 41, 42 ein Rotationsgelenk 8 auf. Das Rotationsgelenk 8 ermöglicht eine Rotation von einem ersten Bereich der Adaptereinheit 4 vor dem Rotationsgelenk 8 zu einem zweiten Bereich der Adaptereinheit hinter dem Rotationsgelenkt 8 zueinander um eine Rotationsachse, die einer Längsachse der Adaptereinheit 4. Somit erlaubt die Kupplungsvorrichtung 101 eine Rotation des Traktors 2 relativ zum Anhänger 3, etwa durch unebenen Untergrund. Die Rotationsachse kann insbesondere parallel zu der horizontalen bzw. vertikalen Ebene liegen, um die das erste bzw. zweite Verbindungselement schwenkbar ist (oder auch in einer dieser Ebenen liegen).

Die Adaptereinheit 4 kann zudem in der Längsrichtung verlängerbar sein. Die Adaptereinheit 4 kann ein- und ausfahrbar sein, sodass ein Abstand vom ersten Verbindungselement 41 zum zweiten Verbindungselement 42 um mindestens 30 cm änderbar sein.

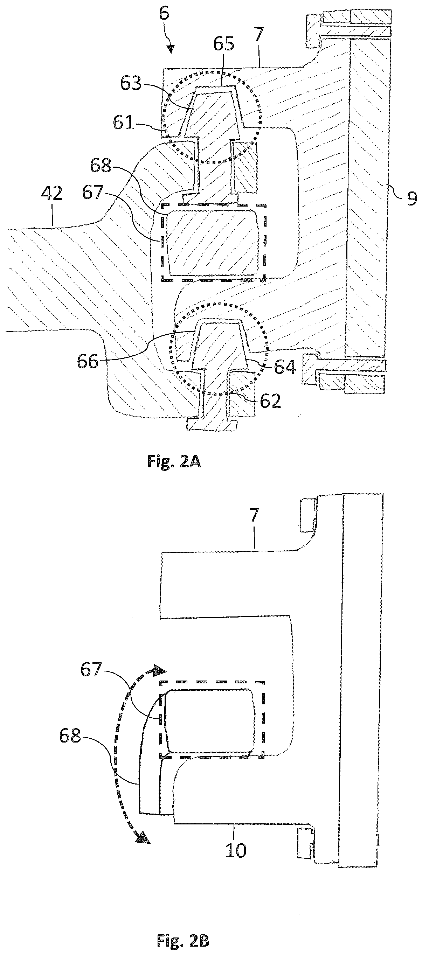

Figur 2A zeigt einen Querschnitt der zweiten Verbindung 6 einer Kupplungsvorrichtung 101. Die zweite Verbindung 6 wird durch ein zweites Verbindungselement 42 und ein komplementäres zweites Verbindungselement 7 gebildet.

Das komplementäre zweite Verbindungselement 7 ist an einem Ende einer Zuggabel 9 angebracht, die lediglich schematisch in Fig. 2A dargestellt ist. Somit kann das zweite Verbindungselement 7 an Zuggabeln 9 von Anhängern, die im bekannten Stand der Technik verwendet werden, leicht angebracht werden.

Ähnlich wie zuvor beschrieben, erlaubt die zweite Verbindung 6 eine Schwenkbarkeit in des zweiten Verbindungselements 42 relativ zu dem komplementären zweiten Verbindungselement 7 in einer horizontalen Ebene und verhindert eine Schwenkbarkeit in einer vertikalen Ebene. Die zweite Verbindung 6 weist zwei übereinander angeordnete Kontaktbereiche 61, 62 auf, die etwa 30 cm voneinander beabstandet sind Die Kontaktbereiche 61, 62 beinhalten ein erstes und zweites Kupplungselement 63, 64, welche durch einen Dorn gebildet werden. Die Dornen 63, 64 erstrecken sich vertikal durch Durchgangslöcher im zweiten Verbindungselement 42. Die Dornen 63, 64 sind auf beiden Enden relativ zum Durchgangsloch aufgeweitet, um zuverlässig im Durchgangsloch fixiert zu werden. Die Kontaktbereiche 61, 62 weisen zudem zwei Aufnahmeelemente 65, 66 auf, welche durch Büchsen gebildet werden. Die Büchsen 65, 66 sind komplementär zu einem konisch nach oben hervorstehenden Bereich der Dornen 63, 64 ausgebildet. Somit können die Dornen 63, 64 mit den Büchsen 65, 66 verbunden werden, indem die Büchsen 65, 66 auf den konisch nach oben hervorstehenden Bereich abgesenkt wird. Zudem weist die Kupplungsvorrichtung einen Arretierbereich 67 zwischen den Kontaktbereichen 61, 62 auf. Ein Arretierelement 68 der Kupplungsvorrichtung 101 ist schwenkbar angeordnet (siehe Fig. 2B), sodass das Arretierelement 68 in den Arretierbereich 67 ein- und ausgeschwenkt werden kann. Wenn das Arretierelement 68 sich im Arretierbereich 67 befindet arretiert das Arretierelement 68 die zweite Verbindung 6, sodass diese gesperrt ist, da die Büchsen 65, 66 und Dornen 63, 64 nicht vertikal relativ zueinander beweglich sind. Zum Lösen kann das Arretierelement 68 aus dem Arretierbereich 67 herausgeschwenkt werden.

Figur 2B zeigt eine perspektivische Ansicht des komplementären zweiten Verbindungselements 7 nach Fig. 2A, in welchem die Büchsen 63, 64 angeordnet sind. Das Arretierelement 68 ist um eine longitudinale Achse eines Büchsenarms 10 des komplementären zweiten Verbindungselements 7 schwenkbar am komplementären zweiten Verbindungselement 7 angebracht.

## Patentansprüche

1. Kupplungsvorrichtung (101) zum Kuppeln eines Anhängers (3) an ein Zugfahrzeug (2) umfassend:
- eine Adaptereinheit (4), die
o ein erstes Verbindungselement (41) für eine erste Verbindung (5) zu dem Zugfahrzeug (2) umfasst, insbesondere zu einem Getriebeblock (21) des Zugfahrzeugs (2), sodass die Adaptereinheit (4) um eine horizontale Achse um die erste Verbindung schwenkbar ist, und
o ein zweites Verbindungselement (42) auf einer gegenüberliegenden zweiten Seite der Adaptereinheit (4) für eine zweite Verbindung (6) zu einem komplementären zweiten Verbindungselement (7) umfasst, sodass die Adaptereinheit (4) relativ zu dem zweiten komplementären Verbindungselement (7) um eine vertikale Achse schwenkbar ist,
- ein komplementäres zweites Verbindungselement (42), **dadurch gekennzeichnet, dass** das zweite Verbindungselement (42) und das komplementäre zweite Verbindungselement (7) nicht um die horizontale Achse, relativ zueinander schwenkbar sind, wenn die zweiten Verbindungselemente (42) die zweite Verbindung (6) ausbilden.

2. Kupplungsvorrichtung (101) nach Anspruch 1, wobei ein Abstand des ersten Verbindungselements (41) zum zweiten Verbindungselement (42) der Adaptereinheit (4) so gewählt ist, dass eine Anbringung an einem Wagenkasten unter, vor, oder an einer Hinterachse eines Fahrzeuges möglich ist, insbesondere 70 cm bis 160 cm, bevorzugt 80 cm bis 150 cm, besonders bevorzugt von 90 cm bis 140 cm beträgt.

3. Kupplungsvorrichtung (101) nach einem der vorhergehenden Ansprüche, wobei die Adaptereinheit (4) eine Ausnehmung (43) auf einer Oberseite und/oder eine Biegung (44) aufweist, insbesondere sodass bei bestimmungsgemässer Anbringung des ersten Verbindungselements (41) an dem Zugfahrzeug (2) bei einem Schwenken der Adaptereinheit (4) um die erste Verbindung (5) ein direkter Kontakt zwischen der Adaptereinheit (4) und einer Hinterachse (H) des Zugfahrzeugs (2) verhindert wird.

4. Kupplungsvorrichtung (101) nach einem der vorhergehenden Ansprüche, wobei das zweite Verbindungselement (42) der Adaptereinheit (4) und das komplementäre zweite Verbindungselement (7) einander an zumindest zwei auf unterschiedlicher Höhe angeordneten, insbesondere vertikal übereinander angeordneten, Kontaktbereichen (61, 62) kontaktieren, wenn die zweite Verbindung (6) ausgebildet wird.

5. Kupplungsvorrichtung (101), insbesondere nach Anspruch 4, wobei die Kupplungsvorrichtung (101) eine Adaptereinheit (4) mit einem zweiten Verbindungselement (42) auf einer Seite aufweist, welches für eine zweite Verbindung (6) zu einem komplementären zweiten Verbindungselement (7) der Kupplungsvorrichtung (101) ausgebildet ist, sodass die Adaptereinheit (4) relativ zum komplementären zweiten Verbindungselement (7) um eine vertikale Achse schwenkbar ist, wobei das erste und zweite Verbindungselement (42, 7) einander an zumindest zwei auf unterschiedlicher Höhe angeordneten, insbesondere vertikal übereinander angeordneten, Kontaktbereichen (61, 62) kontaktieren, wenn die zweite Verbindung (6) ausgebildet wird, und wobei die Kontaktbereiche (61, 62) jeweils ein Kupplungselement, insbesondere einen Dorn (63, 64), und ein Aufnahmeelement, insbesondere eine Buchse (65, 66), aufweisen, die komplementär zueinander geformt sind und ineinandergreifen.

6. Kupplungsvorrichtung (101) nach Anspruch 5, wobei eines der Kupplungselemente (63, 64), insbesondere zwei Kupplungselemente (63, 64), auf der Adaptereinheit (4) oder dem komplementären zweiten Verbindungselement (7) angeordnet sind und/oder eines der Aufnahmeelemente (65, 66), insbesondere zwei Aufnahmeelemente (65, 66), auf der anderen der Adaptereinheit (4) und dem komplementären zweiten Verbindungselement (7) angeordnet sind.

7. Kupplungsvorrichtung nach einem der Ansprüche 4 bis 6, wobei zwischen den auf unterschiedlicher Höhe angeordneten Kontaktbereichen (61, 62) ein Arretierbereich (67) angeordnet ist und ein Arretierelement (68) bewegbar, insbesondere schwenkbar, in den Arretierbereich (67) eingebracht werden kann, um die ausgebildete zweite Verbindung (6) reversibel zu sperren.

8. Kupplungsvorrichtung (101) nach einem der Ansprüche 4 bis 7, wobei der erste und zweite Kontaktbereich (61, 62) vertikal mindestens 20 cm, insbesondere mindestens 25 cm, vorzugsweise mindestens 30 cm voneinander beabstandet sind.

9. Kupplungsvorrichtung (101) nach einem der vorhergehenden Ansprüche, wobei die Adaptereinheit (4) oder das komplementäre zweite Verbindungselement ein Gelenk aufweist, welches eine Rotation von zwei Bereichen der Kupplungsvorrichtung (101) zueinander um eine longitudinale Achse der Kupplungsvorrichtung (101) ermöglicht.

10. Kupplungsvorrichtung (101) nach einem der vorhergehenden Ansprüche, wobei das komplementäre zweite Verbindungselement (7) eine Zuggabel (9) und ein Anhängerverbindungselement (71) für eine Verbindung der Zuggabel (9) zu einem Anhänger (3) umfasst.

11. Kupplungsvorrichtung (101) nach einem der vorhergehenden Ansprüche, wobei das komplementäre zweite Verbindungselement (7) eine Höhe, insbesondere konstante Höhe entlang einer longitudinalen Achse, von mindestens 15 cm, insbesondere mindestens 22,5 cm, vorzugsweise mindestens 30 cm aufweist.

12. Kupplungssystem (201) umfassend eine Kupplungsvorrichtung (101) nach einem der vorhergehenden Ansprüche, und ein Zugfahrzeug (2), wobei die erste Verbindung (5) zum Zugfahrzeug (2) in einer Betriebslage unter einer Längsachse (L1) der Hinterradaufhängung (H) und/oder vor der Längsachse (L1) zwischen den Längsachsen (L1, L2) der Hinterradaufhängung (H) und einer Vorderradaufhängung angebracht ist.

13. Kupplungssystem (201) nach Anspruch 12, wobei die erste Verbindung (5) in der Betriebslage mindestens 15 cm, insbesondere mindestens 22,5 cm, vorzugsweise mindestens 30 cm vor der Längsachse (L1) der Hinterradaufhängung (H) angebracht ist, und wobei die erste Verbindung mindestens 15 cm, insbesondere mindestens 22,5 cm, vorzugsweise mindestens 30 cm unter der Längsachse (L1) angebracht ist.

14. Kupplungssystem (201) nach einem der Ansprüche 12 bis 13, wobei die Adaptereinheit (4) um die erste Verbindung (5) über einen Winkelbereich von mehr als 7,5°, insbesondere mehr als 15°, vorzugsweise mehr als 20°, senkrecht nach oben und/oder unten von einer Längsachse des Getriebeblocks (21) schwenkbar ist, insbesondere ohne die Hinterradaufhängung (H) des Getriebeblocks (21) zu berühren.
